(19) Europäisches Patentamt
European Patent Office
Office européen des brevets

(11) **EP 3 974 125 B1**

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **21208987.4**

(22) Anmeldetag: **14.07.2015**

(51) Internationale Patentklassifikation (IPC):
**B25J 9/16** (2006.01)

(52) Gemeinsame Patentklassifikation (CPC):
**B25J 9/1676;** G05B 2219/36468;
G05B 2219/40371; G05B 2219/49141

(54) **VERFAHREN UND VORRICHTUNG ZUM STEUERN EINES ROBOTERS**

METHOD AND DEVICE FOR CONTROLLING A ROBOT

PROCÉDÉ ET DISPOSITIF DESTINÉS À LA COMMANDE D'UN ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2014 DE 102014010638**

(43) Veröffentlichungstag der Anmeldung:
**30.03.2022 Patentblatt 2022/13**

(62) Dokumentnummer(n) der früheren Anmeldung(en) nach Art. 76 EPÜ:
**15002088.1 / 2 977 148**

(73) Patentinhaber: **KUKA Deutschland GmbH**
**86165 Augsburg (DE)**

(72) Erfinder:
• **HIETMANN, Gerhard**
**86405 Herbertshofen (DE)**
• **UEBERLE, Dr. Marc-Walter**
**86316 Friedberg (DE)**
• **HARTMANN, Christian**
**86343 Königsbrunn (DE)**
• **SCHWARZ, Richard**
**86316 Friedberg (DE)**
• **RUDOLF, Richard**
**86161 Augsburg (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
EP-A1- 0 780 197        EP-A1- 2 113 344
EP-A2- 2 754 537        WO-A1-2013/164622
DE-B3- 102005 054 575

**Beschreibung**

Die vorliegende Erfindung betrifft ein Verfahren zum Steuern eines Roboters sowie eine Vorrichtung und ein Computerprogrammprodukt zur Durchführung eines solchen Verfahrens.

EP 0 780 198 A1 beschreibt ein Roboterbewegungs-Steuerungsvorrichtung zum Bewegen eines Roboterwerkzeugs zu einem vorbestimmten Lernpunkt, ein Programmspeichermittel zum Speichern eines Programms, um den Roboter anzuweisen, zu dem vorbestimmten Lernpunkt bewegt zu werden; ein Vorschub-Befehlsmittel zum Anweisen des Roboters, durch den Vorschub bewegt zu werden; ein Vorschub-Steuermittel zum Bewegen des Roboters durch den Vorschub in der durch das Vorschub-Befehlsmittel angewiesenen Richtung; und ein Lernpunkt-Richtungsbewegungs-Steuermittel zum Überwachen der Position des durch den Vorschub bewegten Roboters und zum Anweisen des Vorschub-Steuermittels, den Roboter, wenn er sich irgendeinem Lernpunkt in dem Bewegungs-Befehlsprogramm nähert, zu einem Lernpunkt zu verschieben, dem der Roboter näher kommt.

Zum Steuern von Robotern ist es nach betriebsinterner Praxis bekannt, den Abstand einer Zustandsgröße des Roboters von einer Grenze zu ermitteln und eine Sicherheitsaktion auszulösen, wenn dieser Abstand eine vorgegebene Bedingung erfüllt. So kann beispielsweise ein STOP 0 ausgelöst, d.h. der Roboter mit unterbrochener Energieversorgung stillgesetzt werden, sobald sein TCP eine Arbeitsraumgrenze oder seine Geschwindigkeit eine zulässige Geschwindigkeitsgrenze überschreitet.

Um dies zu testen, ist es nach betriebsinterner Praxis weiter bekannt, den Roboter manuell an solche Grenzen zu führen, beispielsweise also manuell den TCP über die Arbeitsraumgrenze oder mit einer die Geschwindigkeitsgrenze überschreitenden Geschwindigkeit zu führen und zu prüfen, ob dadurch die Sicherheitsaktion ausgelöst wird.

Insbesondere bei komplexeren Grenzen, beispielsweise Arbeitsraumgrenzen, die durch gekrümmte Hyperflächen im Zustandsraum des Roboters und/oder in Abhängigkeit von der Zustandsgröße selber definiert sind, ist ein solcher Test jedoch schwierig und insbesondere wenig intuitiv.

Neben dem Bestimmen eines Abstandes zu einer vorgegebenen Grenze ist es aus der eigenen DE 10 2008 062 623 A1 auch bekannt, die Abstände einer aktuellen Position zu einer Gruppe von gespeicherten Positionen zu bestimmen und in einem Programm diejenige gespeicherte Position auszuwählen, deren Abstand zu der aktuellen Position minimal ist.

Aufgabe der vorliegenden Erfindung ist es, das Steuern eines Roboters zu verbessern. Dabei wird vorliegend zur kompakteren Darstellung sowohl ein Steuern im engeren kybernetischen Sinne, d.h. ein Vorgeben von Stellgrößen unabhängig von erfassten Ist-Größen ("feedforward control"), als auch ein Regeln, d.h. ein Vorgeben von Stellgrößen auf Basis vorgegebener Soll- und erfasster Ist-Größen ("feedback control"), verallgemeinernd als Steuern bezeichnet.

Diese Aufgabe wird durch ein Verfahren mit den Merkmalen des Anspruchs 1 bzw. 4 gelöst. Anspruch 15 stellt eine Vorrichtung, die, insbesondere hard- und/oder softwaretechnisch, zur Durchführung eines solchen Verfahrens eingerichtet ist, Anspruch 16 ein Computerprogrammprodukt zur Durchführung eines solchen Verfahrens unter Schutz. Die Unteransprüche betreffen vorteilhafte Weiterbildungen.

Nach einem Aspekt der vorliegenden Erfindung wird, insbesondere durch eine hierzu eingerichtete Vorrichtung, ein Roboter in einer oder mehreren, vorzugsweise allen, Posen jeweils wahlweise in einem ersten Betriebsmodus oder einem hiervon verschiedenen zweiten Betriebsmodus gesteuert.

Unter einer Pose wird vorliegend insbesondere die durch die Koordinaten, insbesondere Winkel, seiner Gelenke definierbare, insbesondere definierte, Stellung des Roboters bzw. die Position und/oder Orientierung seiner Glieder relativ zueinander verstanden.

Zwischen dem ersten und zweiten Betriebsmodus kann in einer Ausführung, insbesondere durch ein Betriebsmodusauswahlmittel der Vorrichtung, automatisch und/oder durch eine Benutzereingabe umgeschaltet werden. Entsprechend kann in einer Ausführung der Roboter in wenigstens einer Pose wahlweise in dem ersten oder zweiten Betriebsmodus, in einer Weiterbildung auch noch in einem oder mehreren hiervon verschiedenen weiteren Betriebsmodi, gesteuert werden. Die Auswahl des Betriebsmodus kann posenabhängig oder posenunabhängig sein, insbesondere können vorab der erste oder zweite Betriebsmodus ausgewählt und dann jeweils beliebige Posen angefahren werden.

Sowohl in dem ersten als auch dem zweiten Betriebsmodus wird jeweils, insbesondere durch ein hierzu eingerichtetes Abstandsmittel der Vorrichtung, ein Abstand einer Zustandsgröße des Roboters von einer ersten Grenze ermittelt, wobei der Abstand vorzugsweise in dem ersten und dem zweiten Betriebsmodus in gleicher Weise ermittelt wird.

Eine ein- oder mehrdimensionale *Zustandsgröße* im Sinne der vorliegenden Erfindung kann insbesondere eine oder mehrere, vorzugsweise drei, Positions- bzw. Lagekoordinaten, beispielsweise kartesische, Zylinder- oder Kugelkoordinaten, und/oder eine oder mehrere, vorzugsweise drei, Orientierungskoordinaten, zum Beispiel Euler- oder Kardanwinkel, einer oder mehrerer roboterfester Referenzen, insbesondere eines TCPs des Roboters, und/oder eine erste und/oder höhere Zeitableitung hiervon umfassen, insbesondere sein. Positions- und Orientierungskoordinaten können beispielsweise auch Denavit-Hartenberg-Parameter, Quaternionen oder dergleichen umfassen, insbesondere sein. Zusätzlich oder alternativ kann eine ein- oder mehrdimensionale Zustandsgröße im Sinne der vorliegenden Erfindung insbesondere eine oder mehrere, vorzugsweise alle, Gelenkkoordinaten des Roboters und/oder wenigstens eine erste und/oder höhere Zeitableitung hiervon umfassen, insbesondere sein.

Ein *Abstand* einer Zustandsgröße von einer Grenze kann insbesondere durch eine Norm, etwa eine, insbesondere gewichtete, Betrags- oder Maximumnorm, definiert sein bzw. ermittelt werden. So kann beispielsweise der Abstand einer dreidimensionalen Position (x, y, z) von einer durch y=z=0 definierten linearen Grenze gleichermaßen durch die Betragsnorm $\sqrt{(y^2+z^2)}$ als auch durch die Maximumnorm max{y, z} definiert sein.

In einer Ausführung ist die *Grenze* orientiert und der Abstand gerichtet bzw. vorzeichenbehaftet, so dass eine Zustandsgröße einen positiven oder negativen Abstand aufweist, wenn sie auf der einen oder anderen Seite der orientierten Grenze liegt. So kann beispielsweise der Abstand einer dreidimensionalen Position (x, y, z) von einer durch x=0 definierten planaren Grenze durch die Komponente x definiert sein und ist entsprechend positiv oder negativ, wenn die Position über oder unter der Grenze liegt. Auf diese Weise kann in einer Ausführung ein erlaubtes Annähern des Roboters an die Grenze von einem unerlaubten Eindringen in einen durch die Grenze definierten unzulässigen Bereich einfach und/oder zuverlässig unterschieden werden.

In dem ersten Betriebsmodus wird eine Sicherheitsreaktion ausgelöst, wenn der Abstand eine erste Bedingung erfüllt, insbesondere einen vorgegebenen ersten Grenzwert übersteigt bzw. unterschreitet.

Die *Sicherheitsreaktion* kann insbesondere ein Stillsetzen des Roboters, insbesondere durch eine oder mehrere, vorzugsweise mechanische, Bremsen und/oder einen oder mehrere, vorzugsweise alle, Antriebe des Roboters, und/oder ein Trennen eines oder mehrerer, vorzugsweise aller, Antriebe des Roboters von einer Energieversorgung, insbesondere vor oder nach dem Stillsetzen, umfassen, insbesondere sein. Entsprechend kann die Sicherheitsreaktion insbesondere einen sogenannten STOP 0, d.h. ein Stillsetzen des Roboters durch mechanische Bremsen und Trennen aller Antriebe des Roboters von einer Energieversorgung vor dem Stillsetzen, einen sogenannten STOP 1, d.h. ein Stillsetzen des Roboters durch seine Antriebe und Trennen der Antriebe von einer Energieversorgung nach dem Stillsetzen, oder einen sogenannten STOP 2, d.h. ein Stillsetzen des Roboters durch seine Antriebe ohne Trennen der Antriebe von einer Energieversorgung nach dem Stillsetzen, umfassen, insbesondere ein solcher STOP sein. Vorzugsweise wird die Sicherheitsreaktion in sicherer Technik, insbesondere redundant, vorzugsweise diversitär, ausgelöst und/oder durchgeführt.

In dem zweiten Betriebsmodus ist der Roboter durch manuelles Aufprägen einer Führungskraft auf den Roboter bewegbar. Hierzu kann der Roboter insbesondere, vorzugsweise in an sich bekannter Weise, gravitationskompensiert sein bzw. werden, so dass er einer manuell aufgeprägten Führungskraft folgt und bei Wegfall dieser Führungskraft seine neue Pose, wenigstens im Wesentlichen, beibehält. Gleichermaßen kann der Roboter insbesondere, vorzugsweise in an sich bekannter Weise, impedanzgeregelt sein bzw. werden, so dass er einer manuell aufgeprägten Führungskraft folgt und bei Wegfall dieser Führungskraft wieder, wenigstens im Wesentlichen, in seine alte bzw. eine vorgegebene Pose zurückkehrt. Vorzugsweise ist der Roboter mittels einer Kraftregelung oder einer entsprechenden weichen Positionsregelung durch manuelles Aufprägen einer Führungskraft auf den Roboter bewegbar.

Der Roboter kann auch in dem ersten Betriebsmodus durch manuelles Aufprägen einer Führungskraft auf den Roboter bewegbar sein, insbesondere in gleicher Weise wie in dem zweiten Betriebsmodus. In einer anderen Ausführung wird der Roboter in dem ersten Betriebsmodus programmgesteuert automatisch bewegt, insbesondere kann er, insbesondere mehrmals nacheinander, eine vorgegebene Bahn ab- bzw. vorgegebene Posen anfahren.

Im zweiten Betriebsmodus wird im Gegensatz zum ersten Betriebsmodus jedoch in der- bzw. denselben Posen, die Sicherheitsreaktion nicht deswegen ausgelöst, weil der Abstand die erste Bedingung erfüllt, insbesondere nicht (bereits) dann ausgelöst, wenn bzw. sobald der Abstand die erste Bedingung erfüllt. Mit anderen Worten ist die Erfüllung der Bedingung, die im ersten Betriebsmodus hinreichend für die Auslösung der Sicherheitsreaktion ist, im zweiten Betriebsmodus nicht hinreichend für die Auslösung dieser Sicherheitsreaktion. Wenn der Abstand die erste Bedingung erfüllt, wird stattdessen auf den Roboter motorisch eine Stellkraft in Abhängigkeit von dem Abstand aufgeprägt, um bei unbehindertem Roboter den Abstand zu reduzieren.

Nach diesem Aspekt kann somit eine Sicherheitsüberwachung für den ersten Betriebsmodus, die im ersten Betriebsmodus eine Sicherheitsreaktion auslöst, wenn der Abstand die erste Bedingung erfüllt, beispielsweise der TCP eine vorgegebene Arbeitsraumgrenze oder seine Geschwindigkeit eine vorgegebene Geschwindigkeitsgrenze überschreitet, im zweiten Betriebsmodus durch absichtliches manuelles Überschreiten dieser Grenze getestet werden, ohne die Sicherheitsreaktion auszulösen.

Stattdessen wird dem Roboter in diesem Fall motorisch eine Stellkraft in Abhängigkeit von dem Abstand aufgeprägt, die den Abstand zu reduziert sucht bzw. derart ist, dass sie bei unbehindertem Roboter den Abstand reduzieren. Mit anderen Worten treiben durch die erste Grenze verkörperte virtuelle Constrains den über die erste Grenze hinaus in einen unzulässigen Bereich eingedrungenen Roboter zurück. Auf diese Weise erfährt der Bediener, der den Roboter manuell über die Grenze geführt hat, haptisch einen Widerstand durch diese zur Grenze rückführende Stellkraft.

Auf diese Weise können Sicherheitsüberwachungen bzw. vorgegebene erste Grenzen intuitiv getestet und/oder erfahren, insbesondere mit dem Roboter sozusagen haptisch abgetastet bzw. aufgespürt werden.

In einer Ausführung wird im zweiten Betriebsmodus die Stellkraft auf den Roboter nur aufgeprägt, wenn der Abstand die erste Bedingung erfüllt, so dass erst mit Erreichen bzw. Überschreiten der ersten Grenze diese haptisch durch die Stellkraft erfahrbar ist. In einer anderen Ausführung wird im zweiten Betriebsmodus die Stellkraft auf den Roboter auch aufgeprägt, wenn der Abstand die erste Bedingung erfüllt, jedoch unter Umständen auch, wenn der Abstand die erste Bedingung noch nicht erfüllt, so dass bereits vor Erreichen der bzw. beim Annähern an die erste Grenze diese haptisch durch die Stellkraft erfahrbar ist.

Die Stellkraft kann insbesondere auf die erste Grenze zu gerichtet sein bzw. werden. In einer Ausführung ist sie von dem Abstand und/oder einer ersten und/oder höheren Zeitableitung hiervon abhängig, insbesondere proportional hierzu, und/oder auf einen Maximalwert begrenzt.

Zusätzlich zu der Stellkraft wird in einer Ausführung in dem zweiten Betriebsmodus ein, insbesondere optisches, akustisches und/oder haptisches, Signal, insbesondere eine Vibration, ausgegeben, wenn der Abstand die erste Bedingung erfüllt. Hierdurch kann eine zusätzliche und/oder feinere bzw. präzisere Rückmeldung über das Erreichen der ersten Grenze zur Verfügung gestellt werden. Eine Vibration kann in einer Ausführung durch ein vibrotaktiles Element, insbesondere zum manuellen Aufprägen der Führungskraft und/oder ein Eingabegerät zum Eingeben von Steueranweisungen, oder eine entsprechende wechselnde oder schwellende Steuerung der Antriebe des Roboters ausgegeben werden.

In einer Ausführung wird bzw. ist ein signaltechnischer und/oder physischer, Ausgang eines Abstandsmittels zum Ermitteln des Abstands in dem ersten Betriebsmodus mit einem Sicherheitsmittel zum Auslösen der Sicherheitsreaktion und in dem zweiten Betriebsmodus alternativ mit einem Signalmittel zum Ausgeben des Signals verbunden. Auf diese Weise kann signaltechnisch und/oder physisch dasselbe Ermitteln des Abstandes, das im ersten Betriebsmodus zum Auslösen der Sicherheitsreaktion durchgeführt wird, im zweiten Betriebsmodus zuverlässig getestet werden.

In einer Ausführung wird in dem ersten Betriebsmodus eine erste Sicherheitsreaktion ausgelöst, wenn ein erster Abstand einer ersten Zustandsgröße von einer ersten Grenze eine erste Bedingung erfüllt, und in dem zweiten Betriebsmodus

- in einer Weiterbildung die erste Sicherheitsreaktion und in einer anderen Weiterbildung eine von der ersten Sicherheitsreaktion verschiedene zweite Sicherheitsreaktion ausgelöst, wenn
- in einer Weiterbildung der erste Abstand und in einer anderen Weiterbildung ein von dem ersten Abstand verschiedener zweiter Abstand
- in einer Weiterbildung der ersten Zustandsgröße und in einer anderen Weiterbildung einer von der ersten Zustandsgröße verschiedenen zweiten Zustandsgröße des Roboters
- von einer von der ersten Grenze verschiedenen zweiten Grenze
- in einer Weiterbildung die erste Bedingung und in einer anderen Weiterbildung

eine von der ersten Bedingung verschiedene zweite Bedingung erfüllt, insbesondere, ohne dass auf den Roboter motorisch die Stellkraft in Abhängigkeit von dem Abstand aufgeprägt wird, um bei unbehindertem Roboter den Abstand zu reduzieren.

Zusätzlich oder alternativ wird in einer Ausführung in dem ersten Betriebsmodus eine erste Sicherheitsreaktion ausgelöst, wenn ein erster Abstand einer ersten Zustandsgröße von einer ersten Grenze eine erste Bedingung erfüllt, und in dem zweiten Betriebsmodus

- in einer Weiterbildung die erste Sicherheitsreaktion und in einer anderen Weiterbildung eine von der ersten Sicherheitsreaktion verschiedene zweite Sicherheitsreaktion ausgelöst, wenn
- in einer Weiterbildung der erste Abstand und in einer anderen Weiterbildung ein von dem ersten Abstand verschiedener zweiter Abstand
- in einer Weiterbildung der ersten Zustandsgröße und in einer anderen Weiterbildung einer von der ersten Zustandsgröße verschiedenen zweiten Zustandsgröße des Roboters
- in einer Weiterbildung von der ersten Grenze und in einer anderen Weiterbildung von einer von der ersten Grenze verschiedenen zweiten Grenze
- eine von der ersten Bedingung verschiedene zweite Bedingung erfüllt, insbesondere, ohne dass auf den Roboter motorisch die Stellkraft in Abhängigkeit von dem Abstand aufgeprägt wird, um bei unbehindertem Roboter den Abstand zu reduzieren.

Ist beispielsweise die erste Zustandsgröße eine aktuelle kartesische Position $(x, y, z)$ des TCPs, die erste Grenze eine vorgegebene planare Arbeitsraumgrenze $G: x=0$, der erste Abstand $d$ die vorzeichenorientierte Differenz zwischen dieser Position und dieser Arbeitsraumgrenze, die erste Bedingung, dass dieser erste Abstand größer oder gleich Null ist ($d \geq 0$), und die erste Sicherheitsreaktion ein STOP 1, so wird in einer Ausführung in dem zweiten Betriebsmodus

- in einer Weiterbildung ein STOP 1 (die erste Sicherheitsreaktion) und in einer anderer Weiterbildung ein STOP 0 oder STOP 2 (eine von der ersten Sicherheitsreaktion verschiedene zweite Sicherheitsreaktion) ausgelöst, wenn
- die vorzeichenorientierte Komponente x (der erste Abstand $d$) der ersten Zustandsgröße $(x, y, z)$
- von einer von der ersten Grenze verschiedenen zweiten Grenze, beispielsweise $G': x=1$,

- die erste Bedingung ($d \geq 0$) erfüllt.

In diesem Beispiel kann im zweiten Betriebsmodus somit statt einem STOP 1 beim Überschreiten der Grenze x=0 ein STOP 0, 1 oder 2 ausgeführt werden, wenn der TCP eine andere Grenze überschreitet.

Gleichermaßen kann im obigen Beispiel in dem zweiten Betriebsmodus

- in einer Weiterbildung ein STOP 1 (die erste Sicherheitsreaktion) und in einer anderer Weiterbildung ein STOP 0 oder STOP 2 (eine von der ersten Sicherheitsreaktion verschiedene zweite Sicherheitsreaktion) ausgelöst werden, wenn
- eine vorzeichenorientierte Differenz (der erste Abstand d) zwischen einer kartesischen Geschwindigkeit $v_{ist}$ des TCPs (einer von der ersten Zustandsgröße verschiedene zweite Zustandsgröße des Roboters) und einer zulässigen Maximalgeschwindigkeit $v_{ist}$ (einer von der ersten Grenze verschiedenen zweiten Grenze) die erste Bedingung ($d \geq 0$) erfüllt.

In diesem Beispiel kann im zweiten Betriebsmodus somit statt einem STOP 1 beim Überschreiten der Grenze x=0 ein STOP 0, 1 oder 2 ausgeführt werden, wenn der TCP eine zulässige Maximalgeschwindigkeit überschreitet.

Gleichermaßen kann im obigen Beispiel in dem zweiten Betriebsmodus

- in einer Weiterbildung ein STOP 1 (die erste Sicherheitsreaktion) und in einer anderer Weiterbildung ein STOP 0 oder STOP 2 (eine von der ersten Sicherheitsreaktion verschiedene zweite Sicherheitsreaktion) ausgelöst werden, wenn
- das Maximum $d' = max\{y, z\}$ einer Abweichung einer Komponente (ein von dem ersten Abstand d verschiedener zweiter Abstand) der aktuellen kartesischen Position $(x, y, z)$ des TCPs (der ersten Zustandsgröße) von einer von der ersten Grenze verschiedenen zweiten Grenze ($y= z=0$) eine von der ersten Bedingung verschiedene zweite Bedingung $d' > d_{max}$ erfüllt.

In diesem Beispiel kann im zweiten Betriebsmodus somit statt einem STOP 1 beim Überschreiten der Grenze x=0 ein STOP 0, 1 oder 2 ausgeführt werden, wenn der TCP eine andere Grenze überschreitet.

Gleichermaßen kann im obigen Beispiel in dem zweiten Betriebsmodus

- in einer Weiterbildung ein STOP 1 (die erste Sicherheitsreaktion) und in einer anderer Weiterbildung ein STOP 0 oder STOP 2 (eine von der ersten Sicherheitsreaktion verschiedene zweite Sicherheitsreaktion) ausgelöst werden,
- wenn der erste Abstand d der ersten Zustandsgröße

$(x, y, z)$ von der ersten Grenze $G$: x=0

- eine von der ersten Bedingung verschiedene zweite Bedingung erfüllt, beispielsweise

$$\int_t d(\tau)d\tau > d_0$$

.

In diesem Beispiel kann im zweiten Betriebsmodus somit statt einem STOP 1 beim Überschreiten der Grenze x=0 ein STOP 0, 1 oder 2 ausgeführt werden, wenn ein Integral der Differenz d zwischen der Position und der Arbeitsraumgrenze über der Zeit $t$ einen vorgegebenen Grenzwert $d_0$ überschreitet.

Durch die Auslösung einer Sicherheitsreaktion im zweiten Betriebsmodus ohne dass auf den Roboter motorisch die Stellkraft in Abhängigkeit von dem Abstand aufgeprägt wird, um bei unbehindertem Roboter den Abstand zu reduzieren, überstimmt bzw. overruled sozusagen die Sicherheitsüberwachung im zweiten Betriebsmodus erforderlichenfalls die haptische Interaktion. Mit anderen Worten wird im zweiten Betriebsmodus die Stellkraft in Abhängigkeit von dem Abstand, um bei unbehindertem Roboter den Abstand zu reduzieren, nur aufgeprägt, wenn bzw. solange die erste Bedingung erfüllt UND eine hiervon verschiedene zweite Bedingung nicht erfüllt ist.

In einer Ausführung hängen die erste Grenze und/oder eine Grenze, zu der im zweiten Betriebsmodus ein Abstand ermittelt wird, von einer Zustandsgröße ab, insbesondere von der Zustandsgröße, deren Abstand zu dieser Grenze ermittelt wird. Hierdurch können in einer Ausführung vorteilhaft positions-, richtungs-, orientierungs- und/oder geschwindigkeitsabhängige Grenzen vorgegeben werden bzw. sein.

In einer Ausführung ist bzw. wird die erste Grenze und/oder eine Grenze, zu der im zweiten Betriebsmodus ein Abstand ermittelt wird, durch zwei oder mehr Hyperflächen, insbesondere ein oder mehr Paare von je zwei parallelen oder nicht parallelen Hyperflächen, und/oder durch eine oder mehrere gekrümmte Hyperflächen in einem Zustandsraum des Roboters definiert. Eine gekrümmte Hyperfläche gestattet vorteilhaft eine genauere und/oder numerisch besser handhabbare Berücksichtigung komplexerer Grenzen. Vorzugsweise ist bzw. wird eine gekrümmte Hyperfläche durch sogenannte NURBS vorgegeben.

In einer Ausführung wird der Roboter in dem zweiten Betriebsmodus durch manuelles Aufprägen einer Führungskraft auf den Roboter, insbesondere vorsätzlich, derart bewegt, dass der Abstand der Zustandsgröße des Roboters von der ersten Grenze die erste Bedingung erfüllt.

Nach einem weiteren Aspekt der vorliegenden Erfindung, der vorzugsweise mit dem vorstehend erläuterten Aspekt kombiniert sein kann, wird, insbesondere durch eine hierzu eingerichtete Vorrichtung, beim Bewegen eines Roboters durch manuelles Aufprägen einer Führungskraft auf den Roboter in einem Betriebsmodus ein Abstand einer Zustandsgröße des Roboters von zwei oder mehr voneinander verschiedenen vorgegebenen Referenzen in einem Zustandsraum des Roboters ermittelt, der kleinste dieser Abstände ermittelt, und auf den Roboter motorisch eine Stellkraft aufgeprägt, um bei unbehindertem Roboter den kleinsten der Abstände zu minimieren bzw. die diesen ermittelten kleinsten Abstand zu minimieren sucht bzw. derart ist, dass sie bei unbehindertem Roboter diesen ermittelten kleinsten Abstand minimiert.

Der Betriebsmodus kann insbesondere der vorstehend erläuterte erste oder zweite oder auch ein hiervon verschiedener Betriebsmodus sein. Entsprechend kann in einer Ausführung, insbesondere durch das Betriebsmodusauswahlmittel der Vorrichtung, automatisch und/oder durch eine Benutzereingabe in diesen Betriebsmodus umgeschaltet werden.

Die Zustandsgröße kann insbesondere eine der vorstehend erläuterten Zustandsgrößen sein, insbesondere also ein oder mehr Positions- und/oder Orientierungskoordinaten des TCPs, Gelenkkoordinaten oder dergleichen. Der Abstand kann insbesondere einer der vorstehend erläuterten Abstände sein, insbesondere eine Betrags- oder Maximumnorm oder dergleichen. In einer Ausführung ist der Abstand nicht vorzeichenbehaftet, insbesondere stets positiv. Insbesondere, wenn Abstände auch negative Werte aufweisen können, wird in einer Ausführung der betragsmäßig kleinste dieser Abstände ermittelt und auf den Roboter motorisch eine Stellkraft aufgeprägt, um bei unbehindertem Roboter diesen kleinsten Abstand betragsmäßig zu minimieren.

Der *Zustandsraum* des Roboters ist in einer Ausführung der Raum bzw. die Menge aller möglichen Werte der Zustandsgröße, beispielsweise also der kartesische Arbeitsraum oder der Raum möglicher Gelenkkoordinaten. In einer anderen Ausführung ist der Zustandsraum des Roboters eine vorgegebene echte Teilmenge des Raums bzw. der Menge aller möglichen Werte der Zustandsgröße. Beispielsweise kann der Benutzer durch Vorgabe eines Radius eine (Hyper)Kugel um die aktuelle TCP-Position als Zustandsraum vorgeben, so dass nur in diesem durch eine Vor- bzw. Eingabe begrenzten Zustandsraum in hier erläuterter Weise gesucht wird. Entsprechend ist bzw. wird in einer Ausführung der Zustandsraum, insbesondere durch einen Benutzer, variabel vorgebbar bzw. vorgegeben.

Nach diesem Aspekt wird der Roboter zu der nächsten von mehreren vorgegebenen Referenzen gezogen. Dies kann insbesondere das Auffinden und somit das Abtasten der vorstehend erläuterten Grenzen erleichtern. Entsprechend kann eine Referenz im Sinne dieses Aspekts insbesondere eine Grenze gemäß dem vorstehend erläuterten Aspekt sein. Gleichermaßen kann es insbesondere das Auffinden gespeicherter Posen, Programmpunkte und dergleichen erleichtern. Gleichermaßen kann es insbesondere das Auffinden von nicht direkt gespeicherten Zwischenpunkten auf durch gespeicherte Punkte vorgegebenen Bahnen, Flächen und dergleichen erleichtern. Entsprechend kann eine Referenz im Sinne dieses Aspekts allgemein insbesondere ein vorgegebener, insbesondere gespeicherter, Wert oder Wertebereich, insbesondere eine Linie, (Hyper)Fläche oder ein (Hyper)Volumen, der Zustandsgröße bzw. des Zustandsraums sein. Beispielsweise ist eine abgespeicherte TCP-Position ein Wert im Arbeitsraum des Roboters, ein (Zwischen)Punkt auf einer abgespeicherten Bahn des TCPs ein Wertebereich bzw. eine Linie im Arbeitsraum und eine Grenze nach dem vorstehend erläuterten Aspekt insbesondere eine (Hyper)Fläche im Arbeitsraum.

Entsprechend umfassen in einer Ausführung vorgegebene Referenzen in dem Zustandsraum des Roboters Positionen einer roboterfesten Referenz, insbesondere eines TCPs, und/oder Posen des Roboters, insbesondere einer vorgegebenen Bahn des Roboters, und/oder, insbesondere virtuelle, Strukturen, insbesondere Wände und/oder Koordinatensysteme, in dem Zustandsraum des Roboters.

In einer Ausführung wird diejenige Referenz in dem Zustandsraum des Roboters, die den ermittelten kleinsten Abstand aufweist, angezeigt, insbesondere durch Hervorhebung einer entsprechenden Programmanweisung in einem gespeicherten Programm des Roboters. Wie in der eingangs genannten DE 10 2008 062 623 A1, auf die ergänzend Bezug genommen und deren Inhalt ausdrücklich in die vorliegende Offenbarung einbezogen wird, kann so der Anwender vorteilhaft ein gespeichertes Programm leichter prüfen und/oder verändern.

In einer Ausführung wird bzw. ist der Roboter nachgiebig, insbesondere kraftgeregelt und/oder gravitationskompensiert, geregelt, um durch manuelles Aufprägen einer Führungskraft auf den Roboter bewegbar zu sein, vorzugsweise wie vorstehend bereits mit Bezug auf den vorhergehenden Aspekt erläutert. Insbesondere kann die Stellkraft durch eine Impedanzregelung aufgeprägt werden bzw. sein, deren Soll- bzw. Zielgröße diejenige der Referenzen in dem Zustandsraum des Roboters ist, für die der kleinste Abstand ermittelt wird bzw. worden ist. Mit anderen Worten kann durch die Impedanzregelung, vorzugsweise in an sich bekannter Weise, eine virtuelle Feder zwischen der aktuellen bzw. Istpose des Roboters und der Referenz gespannt werden bzw. sein, für die der kleinste Abstand ermittelt wird bzw. worden ist. Der unbehinderte Roboter wird durch die Impedanzregelung zu der bzw. auf diese Referenz gezogen und minimiert dabei den Abstand.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Aktuator steuern kann.

Weitere Vorteile und Merkmale ergeben sich aus den Unteransprüchen und den Ausführungsbeispielen. Hierzu zeigt, teilweise schematisiert:

Fig. 1:     einen Teil eines Zustandsraums eines Roboters zur Erläuterung eines Verfahrens nach einer Ausführung der vorliegenden Erfindung;

Fig. 2:     den Ablauf eines Verfahrens nach einer Ausführung der vorliegenden Erfindung; und

Fig. 3:     einen Teil einer Steuervorrichtung zur Durchführung des Verfahrens.

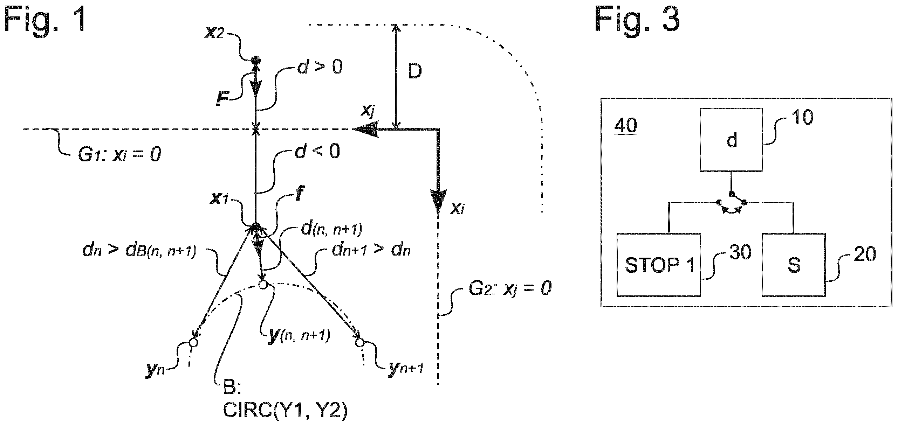

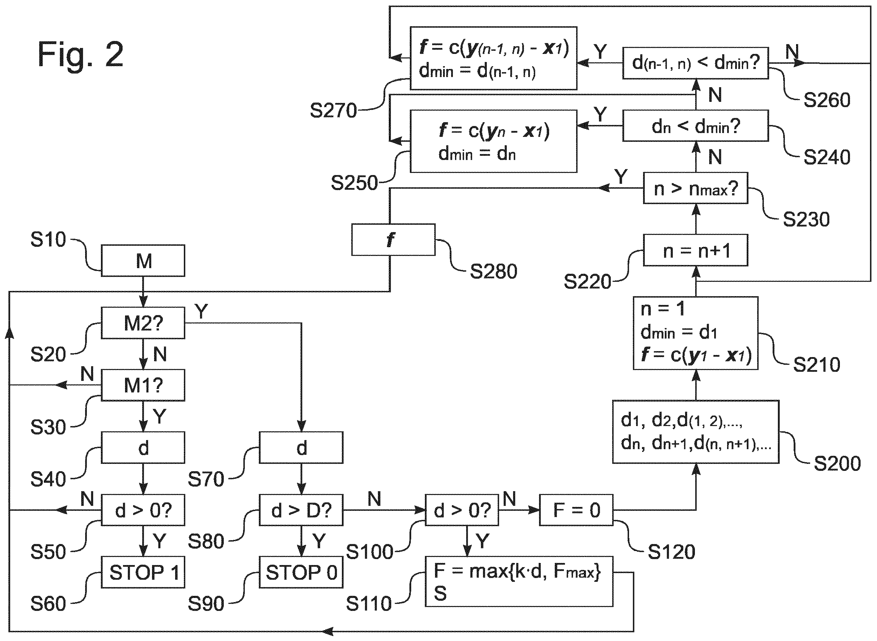

Fig. 1, 2 zeigen einen Teil eines Zustandsraums eines Roboters zur Erläuterung eines durch eine in Fig. 3 teilweise angedeutete Vorrichtung ausgeführten Verfahrens nach einer Ausführung der vorliegenden Erfindung bzw. dessen Ablauf. Dabei werden die beiden vorstehend beschriebenen Aspekte exemplarisch gemeinsam erläutert, sie können jedoch auch jeweils eigenständig verwirklicht sein.

In einem Schritt S10 wird zunächst, beispielsweise durch Eingabe eines Benutzers, ein erster Betriebsmodus M1 oder ein hiervon verschiedener zweiter Betriebsmodus M2 ausgewählt. In einem darauffolgenden Schritt S20 prüft eine Vorrichtung 40, die hard- und softwaretechnisch zur Ausführung des hier beschriebenen Verfahrens eingerichtet und in Fig. 3 teilweise angedeutet ist, ob der zweite Betriebsmodus (S20: "Y") ausgewählt ist, in einem darauffolgenden Schritt S30, ob der erste Betriebsmodus (S30: "Y") ausgewählt ist. Ist keiner der beiden Betriebsmodi ausgewählt (S20: "N", S30: "N"), kehrt das Verfahren zu Schritt S20 zurück.

Wenigstens im zweiten Betriebsmodus M2 ist der Roboter durch manuelles Aufprägen einer Führungskraft auf den Roboter bewegbar, beispielsweise impedanzgeregelt wie nachfolgend erläutert, oder gravitationskompensiert gesteuert. In dem ersten Betriebsmodus wird der Roboter hingegen programmgesteuert automatisch bewegt.

Ist der erste Betriebsmodus M1 ausgewählt (S30: "Y"), wird in einem darauffolgenden Schritt S40 ein Abstand d einer Zustandsgröße des Roboters von einer ersten Grenze ermittelt wird.

Die Zustandsgröße $x$ besteht im zur besseren Darstellung vereinfachten zweidimensionalen Beispiel aus zwei kartesischen Positionskoordinaten $x_i$, $x_j$ des TCPs eines Roboters (nicht dargestellt). In Fig. 1 sind zur Illustration zwei verschiedene Werte $x_1$ und $x_2$ für diese Zustandsgröße, d.h. zwei verschiedene TCP-Positionen $x_1$, $x_2$ im Zustandsraum { $x_i$, $x_j$ } eingezeichnet.

Die erste Grenze G ist zur besseren Darstellung vereinfacht durch $G_1$: $x_i = 0$ und $G_2$: $x_j = 0$ definiert und in Fig. 1 strichliert angedeutet. Dabei ist die Grenze so orientiert, dass TCP-Positionen mit positiven Koordinatenwerten wie insbesondere die exemplarische Position $x_1$ einen negativen Abstand d < 0 aufweisen, während TCP-Positionen mit wenigstens einem negativen Koordinatenwert wie insbesondere die exemplarische Position $x_2$ einen positiven Abstand d > 0 aufweisen.

Im ersten Betriebsmodus M1 prüft die Vorrichtung 40 in einem darauffolgenden Schritt S50, ob dieser Abstand d eine erste Bedingung erfüllt, die im Ausführungsbeispiel dann erfüllt ist, wenn der TCP die Grenze G überschreitet bzw. der vorzeichenbehaftete Abstand d größer als Null ist (d > 0).

Wenn der Abstand d die erste Bedingung erfüllt (S50: "Y"), wird eine Sicherheitsreaktion ausgelöst, im Ausführungsbeispiel ein STOP 1. Andernfalls (S50: "N") kehrt das Verfahren zu Schritt S20 zurück. Mit anderen Worten wird im ersten Betriebsmodus M1 ein STOP 1 ausgelöst, sobald der TCP die Grenze G überschreitet.

Ist der zweite Betriebsmodus M2 ausgewählt (S20: "Y"), wird in einem darauffolgenden Schritt S70 in gleicher Weise wie im ersten Betriebsmodus M1 der Abstand d von der ersten Grenze G ermittelt. Entsprechend können die Schritte S40 und S70 auch durch einen gemeinsamen Schritt von Schritt S20 ersetzt sein. Insbesondere kann ein Ausgang eines Abstandsmittels 10 der Steuervorrichtung 40 des Roboters, wie in Fig. 3 angedeutet, in dem ersten Betriebsmodus M1 mit einem Sicherheitsmittel 30 der Steuervorrichtung 40 zum Auslösen der Sicherheitsreaktion STOP 1 und in dem zweiten Betriebsmodus M2 mit einem Signalmittel 20 der Steuervorrichtung zum Ausgegeben eines Signals S verbunden werden bzw. sein.

Im zweiten Betriebsmodus M2 wird in einem darauffolgenden Schritt S80 geprüft, ob der Abstand d eine von der ersten Bedingung d > 0 verschiedene zweite Bedingung d > D mit einer vorgegebenen Konstanten D > 0 erfüllt. Dies entspricht im vereinfachten Ausführungsbeispiel der Prüfung, ob der Abstand der TCP-Position von einer von der ersten Grenze G verschiedenen zweiten Grenze, die in Fig. 1 doppelstrichpunktiert angedeutet ist, die Bedingung d > 0 erfüllt.

Wenn die Prüfung in Schritt S80 ergibt, dass der TCP die zweite Grenze überschreitet bzw. der Abstand zur ersten Grenze G größer als die vorgegebene Konstante D ist (S80: "Y"), wird in einem Schritt S90 als eine von der Sicherheitsreaktion im ersten Betriebsmodus verschiedene Sicherheitsreaktion ein STOP 0 eingeleitet. Auf diese Weise kann auch im zweiten Betriebsmodus eine Sicherheitsüberwachung stattfinden.

Ergibt die Prüfung in Schritt S80, dass der TCP die zweite Grenze nicht überschreitet bzw. der Abstand zur ersten Grenze G nicht größer als die vorgegebene Konstante D ist (S80: "N"), wird in einem Schritt S100 geprüft, ob der Abstand d die erste Bedingung erfüllt, die auch in Schritt S50 im ersten Betriebsmodus M1 geprüft wird und dann erfüllt ist, wenn der TCP die Grenze G überschreitet bzw. der vorzeichenbehaftete Abstand d größer als Null ist (d > 0).

Wenn der Abstand d im zweiten Betriebsmodus M2 nur die erste Bedingung erfüllt (S100: "Y"), wird keine Sicherheitsreaktion ausgelöst. Somit wird die Sicherheitsreaktion STOP 1 im zweiten Betriebsmodus M2 nicht deswegen bzw. dann ausgelöst, weil bzw. sobald der Abstand d die erste Bedingung erfüllt. Wie vorstehend erläutert, ist damit nicht ausgeschlossen, dass eine Sicherheitsreaktion, im Ausführungsbeispiel ein STOP 0, auch ausgelöst wird, während die erste Bedingung erfüllt ist. Maßgebend ist insoweit, dass die Erfüllung der ersten Bedingung nicht hinreichend für die Auslösung der Sicherheitsreaktion des ersten Betriebsmodus ist, im Ausführungsbeispiel jedoch geometrisch notwendig.

Stattdessen wird in einem Schritt S110 auf den Roboter motorisch eine Stellkraft F in Abhängigkeit von dem Abstand d aufgeprägt, um bei unbehindertem Roboter den Abstand d zu reduzieren, wenn der Abstand d die erste Bedingung d > 0 erfüllt (S100: "Y"). Die Stellkraft F ist hierzu, wie in Fig. 1 angedeutet, zur Grenze G hin gerichtet. Dabei ist sie proportional zu dem Abstand (F = k·d) und durch einen Maximalwert $F_{max}$ limitiert. In einer Abwandlung kann sie zusätzlich oder alternativ auch proportional zu einer zeitlichen Änderung $\partial d/\partial t$ sein.

Dadurch wird im zweiten Betriebsmodus M2 bei Überschreiten der Grenze G nicht wie im ersten Betriebsmodus M1 die Sicherheitsreaktion STOP 1 ausgelöst, sondern stattdessen dem Benutzer, der den Roboter durch manuelles Aufprägen einer Führungskraft bewegt, haptisch eine Rückmeldung in Form einer rücktreibenden Kraft gegeben, die mit zunehmenden Eindringen in einen durch die Grenze G definierten unzulässigen Bereich bis zum Maximalwert $F_{max}$ anwächst.

Zusätzlich wird in Schritt S110 das optische, akustische und/oder haptische, Signal S, beispielsweise eine Vibration, ausgegeben.

Zum Testen der Sicherheitsüberwachung des ersten Betriebsmodus auf Überschreiten der ersten Grenze G bewegt der Benutzer den Roboter in dem zweiten Betriebsmodus M2 entsprechend durch manuelles Aufprägen einer Führungskraft auf den Roboter derart, dass der Abstand d der Zustandsgröße x des Roboters von dieser Grenze G die erste Bedingung d > 0 erfüllt, und spürt durch die deswegen aufgeprägte rücktreibende Kraft F haptisch die Grenze. Zudem wird sie ihm durch das Signal S angezeigt. Da der Ausgang des Abstandsmittels 10, das im ersten Betriebsmodus M1 mit dem Sicherheitsmittel 30 zum Auslösen des STOP 1 verbunden ist, in dem zweiten Betriebsmodus M2 mit dem Signalmittel 20 zum Ausgegeben des Signals S verbunden wird bzw. ist (vgl. Fig. 3), wird anstelle des STOP 1 neben der rücktreibenden Kraft F das Signal S ausgegeben. Auf diese Weise kann der Benutzer die Sicherheitsüberwachung auch signaltechnisch und physisch prüfen.

Wird im zweiten Betriebsmodus in Schritt S90 der STOP 0 ausgelöst, wird hingegen keine Stellkraft aufgeprägt. Insofern "overruled" diese Sicherheitsreaktion sozusagen die haptische Rückmeldung über das Überschreiten der Grenze G.

Wenn der Abstand d im zweiten Betriebsmodus M2 auch die erste Bedingung nicht erfüllt (S100: "N"), wird in einem Schritt S120 keine zur Grenze G rücktreibende Stellkraft aufgeprägt bzw. diese Kraft F zu Null gesetzt.

In einem darauffolgenden Schritt S200 werden in dem zweiten Betriebsmodus M2 die Abstände der Zustandsgröße x des Roboters zu voneinander verschiedenen vorgegebenen Referenzen in dem Zustandsraum des Roboters ermittelt.

Im zur besseren Darstellung vereinfachten Ausführungsbeispiel ist hierzu exemplarisch eine durch zwei Punkte $y_n$ und $y_{n+1}$ vorgegebene Kreisbahn B des TCPs des Roboters strichpunktiert angedeutet. In Schritt S200 werden dann der Abstand $d_n$ der aktuellen Zustandsgröße $x_1$ zu der vorgegebenen Referenz $y_n$, der Abstand $d_{n+1}$ der aktuellen Zustandsgröße $x_1$ zu der vorgegebenen Referenz $y_{n+1}$ sowie der Abstand $d_{(n,\,n+1)}$ der aktuellen Zustandsgröße $x_1$ zu der vorgegebenen Referenz B, im Ausführungsbeispiel der Abstand zu dem der aktuellen TCP-Position $x_1$ nächsten Punkt $y_{(n,\,n+1)}$ der Kreisbahn B, ermittelt.

Durch Abarbeiten der nachfolgend erläuterten Schritte S210 bis S280 wird dann der kleinste Abstand $d_{min}$ der Abstände ermittelt und auf den Roboter motorisch eine in Fig. 1 angedeutete Stellkraft $f$ aufgeprägt, um bei unbehindertem Roboter diesen kleinsten Abstand $d_{min}$ zu minimieren.

Zunächst wird in einem Initialisierungsschritt S210 ein Zähler n auf 1 gesetzt, eine Variable $d_{min}$ für den bisher gefundenen kleinsten Abstand mit dem ermittelten Abstand $d_1$ zu einer ersten der vorgegebenen Referenzen $y_1$ vorbelegt und eine im vereinfachten Ausführungsbeispiel zweidimensionale Vektorvariable für die aufzuprägende Stellkraft $f$ mit einem Wert vorbelegt, der proportional zum Differenzvektor zwischen der aktuellen TCP-Position $x_1$ und der ersten Referenz $y_1$ ist.

In einem darauffolgenden Schritt S220 wird der Zähler n um 1 erhöht und in einem darauffolgenden Schritt S230 geprüft, ob alle Referenzen abgearbeitet sind.

Ist dies nicht der Fall (S230: "N"), wird in einem Schritt S240 für den Abstand $d_n$ der diesem Zähler n entsprechenden Referenz $y_n$ geprüft, ob er kleiner als der bisher gefundene kleinste Abstand $d_{min}$ ist.

Ist dies der Fall (S240: "Y"), wird in einem Schritt S250 dieser Abstand $d_n$ als neuer kleinste Abstand $d_{min}$ gesetzt und die Vektorvariable für die aufzuprägende Stellkraft $f$ mit einem Wert belegt, der proportional zum Differenzvektor zwischen der aktuellen TCP-Position $x_1$

und dieser dem Zähler n entsprechenden Referenz $y_n$ ist.

Ist der Abstand $d_n$ der dem Zähler n entsprechenden Referenz $y_n$ hingegen nicht kleiner als der bisher gefundene kleinste Abstand $d_{min}$ (S240: "N"), oder sind in Schritt S250 $d_{min}$ und $f$ neu belegt worden, wird in einem Schritt S260 für den Abstand $d_{(n, n+1)}$ der Bahn B zwischen dem diesem Zähler n entsprechenden Bahnpunkt $y_n$ und dem darauffolgenden Bahnpunkt $y_{n+1}$ geprüft, ob er kleiner als der bisher gefundene kleinste Abstand $d_{min}$ ist.

Ist dies der Fall (S260: "Y"), wird in einem Schritt S270 dieser Abstand $d_{(n, n+1)}$ als neuer kleinste Abstand $d_{min}$ gesetzt und die Vektorvariable für die aufzuprägende Stellkraft $f$ mit einem Wert belegt, der proportional zum Differenzvektor zwischen der aktuellen TCP-Position $x_1$ und dem Bahnpunkt $y_{(n, n+1)}$ zwischen $y_n$ und $y_{n+1}$ ist, der der aktuellen TCP-Position am nächsten ist.

Dann kehrt das Verfahren zu Schritt S220 zurück und inkrementiert den Zähler n.

Sind alle Referenzen, im Ausführungsbeispiel alle Bahnpunkte und die durch diese definierte Bahn, abgearbeitet (S230: "Y"), wird die solcherart ermittelte Stellkraft $f$ motorisch auf den Roboter aufgeprägt. Zusätzlich wird die Referenz in dem Zustandsraum des Roboters, die den ermittelten kleinsten Abstand aufweist, angezeigt (nicht dargestellt).

Hierdurch wird der TCP, wie in Fig. 1 angedeutet, impedanzgeregelt zu der Referenz gezogen, die seiner aktuellen Position $x_1$ am nächsten ist, im Ausführungsbeispiel dem nächstliegenden Bahnpunkt $y_{(n, n+1)}$.

Dadurch kann insbesondere die Roboterbahn B einfach und intuitiv haptisch geprüft werden. Insbesondere können direkt die vorgegebenen Bahnpunkte $y_1$, ..., $y_n$, $y_{n+1}$ ,... auf einfache Weise aufgefunden werden, wenn im Ausführungsbeispiel die Schritte S260, S270 entfallen, d.h. als Referenzen nicht auch die Bahn, sondern nur die vorgegebenen Bahnpunkte verwendet werden. Gleichermaßen kann zusätzlich oder alternativ auch eine virtuelle Struktur in Form der vorstehend beschriebenen Grenze G als Referenz verwendet und so der TCP kraftgeregelt auf diese gezogen werden, um sie anschließend zu überschreiten und so die Sicherheitsüberwachung zu testen. In diesem Zusammenhang sei darauf hingewiesen, dass die Grenze G eine ebene Hyperfläche bzw. Wand im Zustandsraum { $x_i$, $x_j$ } darstellt.

Obwohl in der vorhergehenden Beschreibung exemplarische Ausführungen erläutert wurden, sei darauf hingewiesen, dass eine Vielzahl von Abwandlungen möglich ist.

Insbesondere können, wie vorstehend ausgeführt, die beiden Aspekte des Aufprägens der zu der Grenze G rücktreibenden Stellkraft $F$ anstelle des Auslösens der Sicherheitsreaktion STOP 1 einerseits und des Aufprägens einer zu einer nächstliegenden Referenz $y_{(n, n+1)}$ treibenden Stellkraft $f$ andererseits auch unabhängig voneinander verwirklicht sein. Insofern können im Ausführungsbeispiel der Fig. 2 insbesondere die Schritte S10 bis S120, die den Aspekt des Aufprägens der zu der Grenze rücktreibenden Stellkraft anstelle des Auslösens der Sicherheitsreaktion betreffen, oder die Schritte S200 bis S280, die den Aspekt des Aufprägens einer zu einer nächstliegenden Referenz treibenden Stellkraft betreffen, entfallen.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| 10 | Abstandsmittel |
|---|---|
| 20 | Signalmittel |
| 30 | Sicherheitsmittel |
| 40 | (Steuer)Vorrichtung |
| $x_1$; $x_2$ | Position des TCP |
| $y_n$; $y_{n+1}$ | vorgegebener Bahnpunkt |
| $y_{(n, n+1)}$ | nächstliegender Bahnpunkt |
| B | Bahn |
| $d_{(min)}$ | (kleinster) Abstand |
| D | vorgegebene Konstante |
| $G_1$, $G_2$ | erste Grenze |
| $F$; $f$ | Stellkraft |
| M1 | erster Betriebsmodus |
| M2 | zweiter Betriebsmodus |
| S | Signal |

**Patentansprüche**

1. Verfahren zum Bewegen eines Roboters durch manuelles Aufprägen einer Führungskraft auf den Roboter, wobei

   in einem Betriebsmodus (M2) ein Abstand ($d_n$, $d_{n+1}$, $d_{(n, n+1)}$) einer Zustandsgröße ($x_1$) des Roboters von wenigstens zwei voneinander verschiedenen vorgegebenen Referenzen ($y_n$, $y_{n+1}$, B) in einem Zustandsraum ({$x_i$, $x_j$}) des Roboters ermittelt wird (S200);
   der kleinste ($d_{min}$) der Abstände ermittelt wird (S210-S270); und
   auf den Roboter motorisch eine Stellkraft ($f$) aufgeprägt wird (S280), um bei unbehindertem Roboter den kleinsten der Abstände zu minimieren.

2. Verfahren nach dem vorhergehenden Anspruch, **da-**

**durch gekennzeichnet, dass** die vorgegebenen Referenzen in dem Zustandsraum des Roboters Positionen ($y_n$, $y_{n+1}$) einer roboterfesten Referenz, insbesondere eines TCPs, und/oder Posen des Roboters, insbesondere eine vorgegebene Bahn (B) des Roboters, und/oder, insbesondere virtuelle, Strukturen, insbesondere Wände ($G_1$, $G_2$) und/oder Koordinatensysteme, in dem Zustandsraum des Roboters umfassen.

3. Verfahren nach einem der vorhergehenden Ansprüche, **dadurch gekennzeichnet, dass** die Referenz in dem Zustandsraum des Roboters, die den ermittelten kleinsten Abstand aufweist, angezeigt wird.

4. Verfahren nach einem der vorhergehenden Ansprüche, **dadurch gekennzeichnet, dass** zum Steuern des Roboters in wenigstens einer Pose wahlweise in einem ersten Betriebsmodus (M1) oder einem hiervon verschiedenen zweiten Betriebsmodus (M2),

in dem ersten Betriebsmodus ein Abstand (d) einer Zustandsgröße ($x_2$) des Roboters von einer ersten Grenze ($G_1$, $G_2$) ermittelt wird (S40); und

eine Sicherheitsreaktion (STOP 1) ausgelöst wird (S60), wenn der Abstand eine erste Bedingung (d > 0) erfüllt; und

in dem zweiten Betriebsmodus der Roboter durch manuelles Aufprägen einer Führungskraft auf den Roboter bewegbar ist;

der Abstand der Zustandsgröße des Roboters von der ersten Grenze ermittelt wird (S70);

die Sicherheitsreaktion nicht deswegen ausgelöst wird, weil der Abstand die erste Bedingung erfüllt; und

auf den Roboter motorisch eine Stellkraft (**F**) in Abhängigkeit von dem Abstand aufgeprägt wird (S110), um bei unbehindertem Roboter den Abstand zu reduzieren, wenn der Abstand die erste Bedingung erfüllt.

5. Verfahren nach dem vorhergehenden Anspruch, **dadurch gekennzeichnet, dass** in dem zweiten Betriebsmodus ein, insbesondere optisches, akustisches und/oder haptisches, Signal (S), insbesondere eine Vibration, ausgegeben wird (S110), wenn der Abstand die erste Bedingung erfüllt.

6. Verfahren nach dem vorhergehenden Anspruch, **dadurch gekennzeichnet, dass** ein Ausgang eines Abstandsmittels (10) zum Ermitteln des Abstands in dem ersten Betriebsmodus mit einem Sicherheitsmittel (30) zum Auslösen der Sicherheitsreaktion und in dem zweiten Betriebsmodus mit einem Signalmittel (20) zum Ausgegeben des Signals verbunden wird.

7. Verfahren nach einem der vorhergehenden Ansprüche, **dadurch gekennzeichnet, dass** in dem zweiten Betriebsmodus eine Sicherheitsreaktion (STOP 0) ausgelöst wird (S90), wenn ein Abstand (d) einer Zustandsgröße ($x_2$) des Roboters von einer von der ersten Grenze verschiedenen zweiten Grenze eine Bedingung erfüllt oder ein Abstand (d) einer Zustandsgröße ($x_2$) des Roboters von einer Grenze ($G_1$, $G_2$) eine von der ersten Bedingung verschiedene zweite Bedingung (d > D) erfüllt, insbesondere, ohne dass auf den Roboter motorisch die Stellkraft in Abhängigkeit von dem Abstand aufgeprägt wird, um bei unbehindertem Roboter den Abstand zu reduzieren.

8. Verfahren nach einem der vorhergehenden Ansprüche, **dadurch gekennzeichnet, dass** wenigstens eine der Zustandsgrößen

wenigstens eine Position- und/oder Orientierungskoordinate ($x_i$, $x_j$) wenigstens einer roboterfesten Referenz, insbesondere eines TCPs, und/oder wenigstens eine Zeitableitung hiervon,
und/oder wenigstens eine Gelenkkoordinate des Roboters und/oder wenigstens eine Zeitableitung hiervon umfasst.

9. Verfahren nach einem der vorhergehenden Ansprüche, **dadurch gekennzeichnet, dass** wenigstens eine der Sicherheitsreaktionen ein Stillsetzen des Roboters, insbesondere durch wenigstens eine Bremse und/oder wenigstens einen Antrieb des Roboters, und/oder ein Trennen wenigstens eines Antriebs des Roboters von einer Energieversorgung umfasst.

10. Verfahren nach einem der vorhergehenden Ansprüche, **dadurch gekennzeichnet, dass** wenigstens eine der Grenzen von einer der Zustandsgrößen abhängt.

11. Verfahren nach einem der vorhergehenden Ansprüche, **dadurch gekennzeichnet, dass** wenigstens eine der Grenzen durch wenigstens zwei, insbesondere parallele oder nicht parallele, Hyperflächen ($G_1$, $G_2$) und/oder wenigstens eine gekrümmte Hyperfläche in einem Zustandsraum ($\{x_i, x_j\}$) des Roboters definiert ist.

12. Verfahren nach einem der vorhergehenden Ansprüche, **dadurch gekennzeichnet, dass** der Roboter in dem ersten Betriebsmodus programmgesteuert automatisch bewegt wird oder durch manuelles Aufprägen einer Führungskraft auf den Roboter bewegbar ist.

13. Verfahren nach einem der vorhergehenden Ansprüche, **dadurch gekennzeichnet, dass** der Roboter in dem zweiten Betriebsmodus durch manuelles Aufprägen einer Führungskraft auf den Roboter derart bewegt wird, dass der Abstand der Zustandsgröße des Roboters von der ersten Grenze die erste Bedingung erfüllt.

14. Verfahren nach einem der vorhergehenden Ansprüche, **dadurch gekennzeichnet, dass** der Roboter nachgiebig, insbesondere kraftgeregelt und/oder gravitationskompensiert, geregelt wird, um durch manuelles Aufprägen einer Führungskraft auf den Roboter bewegbar zu sein.

15. Vorrichtung (40) zum Steuern eines Roboters, die zum Durchführen eines Verfahrens nach einem der vorhergehenden Ansprüche eingerichtet ist.

16. Computerprogrammprodukt mit einem Programmcode, der auf einem von einem Computer lesbaren Medium gespeichert ist, zur Durchführung eines Verfahrens nach einem der vorhergehenden Ansprüche.

**Claims**

1. A method of moving a robot by manually applying a guiding force to the robot, wherein:

   in a mode of operation (M2), a distance ($d_n$, $d_{n+i}$, $d_{(n, n+1)}$) of a state variable ($x_1$) of the robot from at least two predetermined references ($y_n$, $y_{n+1}$, B) in a state space ($\{x_i, x_j\}$) of the robot, which at least two predetermined references ($y_n$, $y_{n+1}$, B) are different from one another, is determined (S200);
   the smallest ($d_{min}$) of the distances is determined (S210 - S270); and
   a positioning force ($f$) is applied to the robot in a motorised manner (S280) in order to minimise the smallest of the distances when the robot is not impeded.

2. The method as claimed in the preceding claim, **characterised in that** the predetermined references in the state space of the robot comprise positions ($y_n$, $y_{n+1}$) of a reference fixed with respect to the robot, in particular a TCP, and / or poses of the robot, in particular a predetermined path (B) of the robot, and / or structures, in particular virtual structures, in particular walls ($G_1$, $G_2$) and / or coordinate systems, in the state space of the robot.

3. The method as claimed in any one of the preceding claims, **characterised in that** the reference in the state space of the robot which has the determined smallest distance is displayed.

4. The method as claimed in any one of the preceding claims, **characterised in that**, in order to control the robot,

   in at least one pose, selectively in a first mode of operation (M1) or in a second mode of operation (M2) which is different therefrom, in the first mode of operation,

   a distance (d) of a state variable ($x_2$) of the robot from a first limit ($G_1$, $G_2$) is determined (S40); and
   a safety reaction (STOP 1) is triggered (S60) if the distance satisfies a first condition (d > 0); and

   in the second mode of operation

   the robot can be moved by manually applying a guiding force to the robot;
   the distance of the state variable of the robot from the first limit is determined (S70);
   the safety reaction is not triggered as a result of the distance satisfying the first condition; and
   a positioning force ($F$) is applied to the robot in a motorised manner (S110) as a function of the distance in order to reduce the distance when the robot is not impeded and when the distance satisfies the first condition.

5. The method as claimed in the preceding claim, **characterised in that**, in the second mode of operation, a signal (S), in particular an optical signal (S), an acoustic signal (S) and / or a haptic signal (S), in particular a vibration, is emitted (S110) when the distance satisfies the first condition.

6. The method as claimed in the preceding claim, **characterised in that**, in the first mode of operation, an output of a distance means (10) for determining the distance is connected to a safety means (30) for triggering the safety reaction and, in the second mode of operation, the output of the distance means (10) is connected to a signal means (20) for outputting the signal.

7. The method as claimed in any one of the preceding claims, **characterised in that**, in the second mode of operation, a safety reaction (STOP 0) is triggered (S90) if a distance (d) of a state variable ($x_2$) of the robot from a second limit which is different from the first limit satisfies a condition, or a distance (d) of a state variable ($x_2$) of the robot from a limit ($G_1$, $G_2$) satisfies a second condition (d > D) which is different from the first condition, in particular without the positioning force being applied to the robot by a motor as a function of the distance, in order to reduce the distance when the robot is not impeded.

8. The method as claimed in any one of the preceding claims, **characterised in that** at least one of the state variables

comprises at least one position coordinate ($x_i$, $x_j$) and / or at least one orientation coordinate ($x_i$, $x_j$) of at least one reference fixed with respect to the robot, in particular of a TCP, and / or at least one time derivative thereof, and / or comprises at least one joint coordinate of the robot and / or at least one time derivative thereof.

9. The method as claimed in any one of the preceding claims, **characterised in that** at least one of the safety reactions comprises stopping the robot, in particular by means of at least one brake and / or at least one drive of the robot, and / or disconnecting at least one drive of the robot from a power supply.

10. The method as claimed in any one of the preceding claims, **characterised in that** at least one of the limits is a function of one of the state variables.

11. The method as claimed in any one of the preceding claims, **characterised in that** at least one of the limits is defined by at least two hypersurfaces ($G_1$, $G_2$), in particular at least two parallel or non-parallel hypersurfaces ($G_1$, $G_2$), and / or at least one curved hypersurface in a state space ($\{x_i, x_j\}$) of the robot.

12. The method as claimed in any one of the preceding claims, **characterised in that**, in the first mode of operation, the robot is moved automatically under the control of a program or can be moved by manually applying a guiding force to the robot.

13. The method as claimed in any one of the preceding claims, **characterised in that**, in the second mode of operation, the robot is moved by manually applying a guiding force to the robot in such a way that the distance of the state variable of the robot from the first limit satisfies the first condition.

14. The method as claimed in any one of the preceding claims, **characterised in that** the robot is controlled in a compliant manner, in particular in a force-controlled and / or gravitationally compensated manner, so that it can be moved by manually applying a guiding force to the robot.

15. A device (40) for controlling a robot, which is arranged to carry out a method as claimed in any one of the preceding claims.

16. A computer program product comprising a program code which is stored on a computer readable medium, for carrying out a method as claimed in any one of the preceding claims.

## Revendications

1. Procédé pour déplacer un robot par application manuelle d'une force de guidage sur le robot, dans lequel dans un mode de fonctionnement (M2) un écart ($d_n$, $d_{n+1}$, $d_{(n, n+1)}$) d'une grandeur d'état ($x_1$) du robot par rapport à au moins deux références ($y_n$, $y_{n+1}$, B) prédéfinies différentes les unes des autres dans un espace d'état ($\{x_i, x_j\}$) du robot est déterminé (S200) ;

le plus petit ($d_{min}$) des écarts est déterminé (S210-S270) ; et une force de réglage (f) est appliquée (S280) sur le robot de façon motrice, afin de minimiser le plus petit des écarts lorsque le robot n'est pas entravé.

2. Procédé selon la revendication précédente, **caractérisé en ce que** les références prédéfinies dans l'espace d'état du robot comprennent des positions ($y_n$, $y_{n+1}$) d'une référence fixée au robot, en particulier d'un point central d'outil, et/ou des poses du robot, en particulier une trajectoire (B) prédéfinie du robot, et/ou des structures, en particulier virtuelles, en particulier des parois ($G_1$, $G_2$) et/ou systèmes de coordonnée, dans l'espace d'état du robot.

3. Procédé selon l'une quelconque des revendications précédentes, **caractérisé en ce que** la référence dans l'espace d'état du robot qui présente le plus petit écart déterminé est affichée.

4. Procédé selon l'une quelconque des revendications précédentes, **caractérisé en ce que** pour commander le robot dans au moins une pose sélectivement dans un premier mode de fonctionnement (M1) ou un deuxième mode de fonctionnement (M2) différent de celui-ci,

dans le premier mode de fonctionnement un écart (d) d'une grandeur d'état ($x_2$) du robot par rapport à une première limite ($G_1$, $G_2$) est déterminé (S40) ; et une réaction de sécurité (STOP 1) est déclenchée (S60), lorsque l'écart remplit une première condition (d > 0) ; et dans le deuxième mode de fonctionnement le robot peut être déplacé par application manuelle d'une force de guidage sur le robot ; l'écart de la grandeur d'état du robot par rapport à la première limite est déterminé (S70) ; la réaction de sécurité n'est par conséquent pas déclenchée, car l'écart remplit la première condition ; et

une force de réglage (F) est appliquée (S110) sur le robot de façon motrice en fonction de l'écart, afin de réduire l'écart lorsque le robot n'est pas entravé, lorsque l'écart remplit la première condition.

5. Procédé selon la revendication précédente, **caractérisé en ce que** dans le deuxième mode de fonctionnement un signal (S), en particulier optique, acoustique et/ou haptique, en particulier une vibration, est émis (S110), lorsque l'écart remplit la première condition.

6. Procédé selon la revendication précédente, **caractérisé en ce qu'**une sortie d'un moyen relatif à l'écart (10) pour déterminer l'écart dans le premier mode de fonctionnement est reliée à un moyen relatif à la sécurité (30) pour déclencher la réaction de sécurité et dans le deuxième mode de fonctionnement à un moyen relatif au signal (20) pour émettre le signal.

7. Procédé selon l'une quelconque des revendications précédentes, **caractérisé en ce que** dans le deuxième mode de fonctionnement une réaction de sécurité (STOP 0) est déclenchée (S90), lorsqu'un écart (d) d'une grandeur d'état ($x_2$) du robot par rapport à une deuxième limite différente de la première limite remplit une condition ou un écart (d) d'une grandeur d'état ($x_2$) du robot par rapport à une limite ($G_1$, $G_2$) remplit une deuxième condition (d > D) différente de la première condition, en particulier, sans que la force de réglage soit appliquée sur le robot de façon motrice en fonction de l'écart, afin de réduire l'écart lorsque le robot n'est pas entravé.

8. Procédé selon l'une quelconque des revendications précédentes, **caractérisé en ce qu'**au moins une des grandeurs d'état

comprend au moins une coordonnée de position et/ou d'orientation ($x_i$ ; $x_j$) au moins d'une référence fixée au robot, en particulier d'un point central d'outil, et/ou au moins une dérivée temporelle de celui-ci, et/ou au moins une coordonnée d'articulation du robot et/ou au moins une dérivée temporelle de celle-ci.

9. Procédé selon l'une quelconque des revendications précédentes, **caractérisé en ce qu'**au moins une des réactions de sécurité comprend un arrêt du robot, en particulier par au moins un frein et/ou au moins un entraînement du robot, et/ou une séparation d'au moins un entraînement du robot d'une alimentation en énergie.

10. Procédé selon l'une quelconque des revendications précédentes, **caractérisé en ce qu'**au moins une des limites dépend d'une des grandeurs d'état.

11. Procédé selon l'une quelconque des revendications précédentes, **caractérisé en ce qu'**au moins une des limites est définie par au moins deux hypersurfaces ($G_1$, $G_2$), en particulier parallèles ou non parallèles, et/ou au moins une hypersurface courbée dans un espace d'état ($\{x_i, x_j\}$) du robot.

12. Procédé selon l'une quelconque des revendications précédentes, **caractérisé en ce que** le robot dans le premier mode de fonctionnement est déplacé de manière automatique de façon commandée par un programme ou peut être déplacé par application manuelle d'une force de guidage sur le robot.

13. Procédé selon l'une quelconque des revendications précédentes, **caractérisé en ce que** le robot dans le deuxième mode de fonctionnement est déplacé par application manuelle d'une force de guidage sur le robot de telle sorte que l'écart de la grandeur d'état du robot par rapport à la première limite remplit la première condition.

14. Procédé selon l'une quelconque des revendications précédentes, **caractérisé en ce que** le robot est régulé de façon souple, en particulier régulé en force et/ou compensé en gravitation, afin de pouvoir être déplacé par application manuelle d'une force de guidage sur le robot.

15. Dispositif (40) pour commander un robot, qui est conçu pour mettre en oeuvre un procédé selon l'une quelconque des revendications précédentes.

16. Produit-programme d'ordinateur avec un code de programme, qui est mis en mémoire sur un support lisible par un ordinateur, pour la mise en oeuvre d'un procédé selon l'une quelconque des revendications précédentes.

# Fig. 1

$x_2$

$d > 0$

$F$

$D$

$x_j$

$G_1: x_i = 0$

$d < 0$

$x_1$    $f$

$x_i$

$d_n > d_{B(n, n+1)}$

$d_{(n, n+1)}$

$d_{n+1} > d_n$

$y_{(n, n+1)}$

$G_2: x_j = 0$

$y_n$

$y_{n+1}$

B:
CIRC(Y1, Y2)

# Fig. 3

40

d — 10

STOP 1 — 30

S — 20

EP 3 974 125 B1

EP 3 974 125 B1

# Fig. 2

S10 — M

S20 — M2?  N  Y

S30 — M1?  N  Y

S40 — d

S50 — d > 0?  N  Y

S60 — STOP 1

S70 — d

S80 — d > D?  N  Y

S90 — STOP 0

S100 — d > 0?  N  Y

S110 — $F = \max\{k \cdot d, F_{max}\}$  S

S120 — F = 0

S200 — $d_1, d_2, d_{(1, 2)}, \ldots, d_n, d_{n+1}, d_{(n, n+1)}, \ldots$

S210 — $n = 1$  $d_{min} = d_1$  $\boldsymbol{f} = c(\boldsymbol{y}_1 - \boldsymbol{x}_1)$

S220 — n = n+1

S230 — $n > n_{max}$?  N  Y

S240 — $d_n < d_{min}$?  N  Y

S250 — $\boldsymbol{f} = c(\boldsymbol{y}_n - \boldsymbol{x}_1)$  $d_{min} = d_n$

S260 — $d_{(n-1, n)} < d_{min}$?  Y  N

S270 — $\boldsymbol{f} = c(\boldsymbol{y}_{(n-1, n)} - \boldsymbol{x}_1)$  $d_{min} = d_{(n-1, n)}$

S280 — $\boldsymbol{f}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0780198 A1
- DE 102008062623 A1